# EUROPÄISCHE PATENTSCHRIFT

(11) **EP 1 627 161 B1**
(45) Veröffentlichungstag und Bekanntmachung des Hinweises auf die Patenterteilung: **06.08.2008**
(21) Anmeldenummer: 04738566.1
(22) Anmeldetag: 26.05.2004
(51) Int. Cl.: F16F 1/32

(54) **AN EINER KREISZYLINDRISCHEN OBERFLÄCHE EINES AUFNAHMEKÖRPERS AXIAL VERSCHIEBEGESICHERTE TELLERFEDER**
PLATE SPRING, WHICH IS PREVENTED FROM BEING AXIALLY DISPLACED ON A CIRCULAR CYLINDRICAL SURFACE OF A RECEIVING BODY
RONDELLE-RESSORT A DEPLACEMENT BLOQUE AXIALEMENT

(30) Priorität: 26.05.2003 DE 10323577
(43) Veröffentlichungstag der Anmeldung: 22.02.2006
(73) Patentinhaber: Christian Bauer GmbH & Co., 73642 Welzheim (DE)
(72) Erfinder: BUCHHAGEN, Peter, 73642 Welzheim (DE)
(74) Vertreter: Bongen, Renaud & Partner
(86) Internationale Anmeldenummer: PCT/DE2004/001097
(87) Internationale Veröffentlichungsnummer: WO 2004/106767

(56) Entgegenhaltungen:
- EP-A- 0 247 400
- EP-A- 0 346 690
- EP-A- 0 849 477
- EP-A- 1 092 881
- DE-B- 1 145 862
- DE-C- 634 827
- DE-C- 852 319
- DE-U- 1 752 253
- FR-A- 2 465 120
- US-A- 4 364 615

## Beschreibung

Die Erfindung betrifft zwei gegeneinander verspannte Bauteile nach dem Oberbegriff des Patentanspruchs 1.

Eine solche Bauteilverspannung ist aus FR-A-2 465 120 bekannt. Bei dieser Ausführung ist in Umfangsrichtung zwischen den einzelnen, radial nach innen abstehenden Stegen jeweils nur ein sehr geringer Abstand gegeben. Dies folgt aus einer hohen Anzahl an auf dem Innenumfang der Tellerfeder angebrachter Stege. Die Stege sind in Umfangsrichtung praktisch nur durch schmale Schlitze voneinander getrennt. Damit die Tellerfeder mit ihrem Innenumfang bei einer Montage auf eine Welle in die dortige Aufnahmenut einspringen kann, müssen die einzelnen Stege axial entgegen der Schieberichtung verbogen werden. Möglich ist ein solches Verbiegen ohne plastische Verformung nur bei Stegen, die relativ flexibel ausgestaltet sind. Bei Stegen, die zur Erzeugung hoher axialer Presskräfte eine solche Flexibilität nicht aufweisen können, lassen sich derartige Tellerfedern nicht zerstörungsfrei, das heißt ohne plastische Verformung montieren. Eine Materialzerstörung erfolgt dabei durch eine Überdehnung der Federstege, die damit ihre erforderliche Federeigenschaft, das heißt Spannkraft nach einem Einschnappen der Tellerfeder in die Aufnahmeringnut, nicht mehr besitzen.

Aus DE 852319 C sind zwei gegeneinander verspannte Bauteile bekannt, bei denen ein erstes ein zweites Bauteil durchgreift, wobei die beiden Bauteile einenends starr aneinander liegen und anderenends federnd miteinander verspannt sind. Die federnde Verspannung wird durch einen Sprengring bewirkt, der radial außen in einer Ringnut des ersten Bauteiles lagert und radial innen federnde Füße besitzt, die federnd an der betreffenden Stirnseite des ersten Bauteiles anliegen. Bei dem Sprengring handelt es sich um einen offenen, das heißt umfangsmäßig geschlitzten Sicherungsring. Ein solcher, offener Sicherungsring lässt sich wegen seiner radialen Nachgiebigkeit leicht montieren, da er in bei Sprengringen üblicher Weise in gespreizter Form aufgesetzt werden kann. Ein solcher offener Sicherungsring ist nicht geeignet, axial hohe Federkräfte als Anpresskräfte zu erzeugen.

Bei gattungsähnlichen Bauteilverspannungen nach US-A-4 364 615 und EP-A-0 247 400 sind die Federstege bei der Montage derart geknickt, dass weder von diesen Stegen, noch von dem äußeren Mantelring der Tellerfeder hohe Federkräfte bei einer gegenseitigen, axialen Verschiebung der durch die Tellerfeder fixierten Bauteile sicher aufgebracht werden können.

Ausgehend von einer Bauteilverbindung mit einer Tellerfeder nach FR-A-2 465 120 beschäftigt sich die Erfindung mit dem Problem, mit der verwendeten Tellerfeder einerseits eine hohe Anpresskraft erzeugen zu können und andererseits einen funktionell sicheren, relativ großen Einfederungsweg für ein axial gegeneinander erfolgendes Verschieben der beiden durch die Tellerfeder gegeneinander gespannten Bauteile zu ermöglichen.

Gelöst wird dieses Problem durch eine Ausgestaltung einer aus beispielsweise FR-A-2 465 120 bekannten Spanneinrichtung in einer Ausbildung mit dem kennzeichnenden Merkmal des Patentanspruchs 1.

Erfindungsgemäß wird eine Zerstörung durch plastische Verformung beziehungsweise negative Beeinflussung der Federeigenschaft einer Tellerfeder mit radialen Spannstegen dadurch vermieden, dass auf den Innenumfang der Tellerfeder lediglich Federstege mit einem großen umfangsmäßigen Abstand voneinander vorgesehen sind. Solche großen Umfangsabstände verbunden mit einer radial kurzen, geschlossenen Mantelfläche ermöglichen beim Montieren eine Verformung der äußeren, geschlossenen Mantelfläche der Tellerfeder durch radiale Ausbuchtungen. Hierdurch wird eine plastische Verformung der Stege vermieden, wie sie bei hohen Federsteifigkeiten der Stege auftreten würden, wenn kein radiales Ausdehnen nach außen des äußeren Tellerfederrandes möglich wäre. Bedingt wäre eine solche plastische Verformung durch den hohen Verformungsgrad, dem die Federstege bei der Montage bei fehlender radialer Ausdehnung des Tellerfederrandes unterworfen wären.

Vorteilhafte und zweckmäßige Ausgestaltungen der Erfindung sind Gegenstand der Unteransprüche.

Beim axialen Einfedern einer Tellerfeder verringert sich deren Innendurchmesser, während sich deren Außendurchmesser vergrößert. Dies bedeutet, dass eine Tellerfeder mit einem gegenüber dem Durchmesser einer Welle, auf die die Tellerfeder aufgesetzt werden soll, im kraftfreien Zustand kleineren Innendurchmesser, wenn diese Tellerfeder unter einer einem Spannen entgegengesetzten Kraftanwendung auf die betreffende Welle aufgeschoben wird, mit dem Innenrand in eine Umfangsnut der Welle einschnappen wird, sobald die Tellerfeder mit ihrem Innenrand die Umfangsnut erreicht.

Durch ein solches Einschnappen in eine Umfangsnut einer Welle ist praktisch bereits eine axiale Verschiebesicherung axial beidseitig gegeben, wenn eine solche beidseitige Sicherung, auf die sich die Erfindung in dieser Form nicht bezieht, gewünscht wird.

Damit eine derart axial verschiebegesicherte Tellerfeder von ihrer konkaven Seite aus erfindungsgemäß eine Federkraft gegen einen Gegenkörper ausüben kann, ist der Innendurchmesser der Tellerfeder mit Bezug auf den Durchmesser der Umfangsnut derart auszulegen, dass über den gesamten axialen Federweg der Tellerfeder stets noch ein radiales Spiel zwischen dem Grund der Umfangsnut und dem Innenrand der Tellerfeder gegeben ist. Wird nach Überschreiten einer vorgebbaren Federkraft eine progressive Federkrafterhöhung gewünscht, kann die Durchmesserabstimmung derart vorgenommen werden, dass bei Überschreiten eines vorgebbaren Grenzwertes das radiale Spiel zwischen Grund der Umfangsnut und Innenrand der Tellerfeder aufgehoben ist.

Da der Innendurchmesser sich vergrößert, wenn die Tellerfeder in Gegenrichtung der regulären Einfederung verformt wird, lässt sich die erfindungsgemäße axiale Verschiebesicherung einfach erzielen, wenn die Tellerfeder ohne Gegenkraft bis in die Umfangsnut, in die sie einschnappen soll, auf eine Welle aufgeschoben werden kann.

Etwas unterschiedlich liegt der Fall, wenn die Tellerfeder nach dem der Erfindung zugrundeliegenden Problem zum Einschnappen in die Umfangsnut bereits bei Anlage an einem Gegenkörper vor dem Einschnappen in die Umfangsnut gespannt werden muss. In diesem Fall muss die Tellerfeder sich entweder insgesamt radial elastisch dehnen können oder es muss ein Innenrandbereich der Tellerfeder vorgesehen sein, der sich vor dem Einschnappen der Tellerfeder in die Umfangsnut in axialer Richtung elastisch unter gleichzeitiger radialer Erweiterung verformen kann.

Erfindungsgemäß ist es in dem zuletzt genannten Anwendungsfall erforderlich, dass der Innenumfangsbereich der Tellerfeder umfangsmäßig in radial jeweils frei abstehende, voneinander beabstandete Federstege aufgelöst ist. Dann können diese radialen Federstege sich für den Einschnappvorgang in einer hierfür erfindungsgemäß notwendigen Weise temporär elastisch verformen. Ebenso kann bei entsprechender Geometriegebung die Tellerfeder im Bereich der Federstege für den Einschnappvorgang elastisch radial nach außen ausweichen. Dafür muss das Verhältnis von Innendurchmesser zu Außendurchmesser der Tellerfedermantelfläche möglichst nahe eins und der Abstand der Federstege groß sein. Dies lässt sich durch Reduzieren der Anzahl an Federstegen an der Tellerfeder auf fünf bis zwei erreichen, wobei die Wirkung mit abnehmender Anzahl verbessert wird. Bei nur noch zwei Federstegen muss das seitliche Abrutschen der Tellerfeder aus der Umfangsnut durch zusätzliche Maßnahmen verhindert werden. Des weiteren ist der Übergangsbereich der Federstege zur Mantelfläche der Tellerfeder möglichst schmal zu wählen. Der Anteil dieser Übergangsbereiche am Umfang des Innendurchmessers der Tellerfedermantelfläche sollte nicht größer als 15 %, besser kleiner als 12%, bevorzugt sogar kleiner als 10% sein.

In jedem Fall kann eine Tellerfeder besonders leicht in eine Umfangsnut einschnappen, wenn die Tellerfeder, ohne bleibend verformt zu werden, so weit eingefedert wird, bis die Tellerfeder umgestülpt ist und der Innendurchmesser über den im kraftfreien Zustand zunehmen kann. Eine derart gespannte Tellerfeder kann auf der Welle verschoben werden, bis der Innendurchmesser oder die Federstege unter Entspannen der Tellerfeder in die Umfangsnut einrasten.

Bei einer axialen Verschiebesicherung der Tellerfeder in einer Bohrung ist der Außenumfang der Tellerfeder entsprechend mit Federstegen auszubilden.

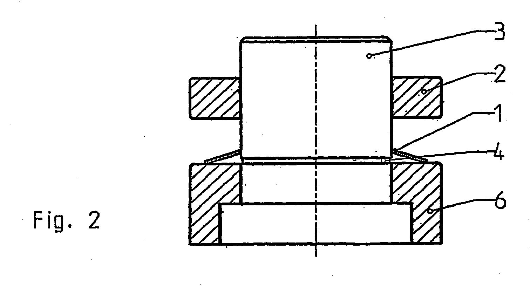

Ausführungsbeispiele, von denen lediglich dasjenige nach Fig. 2 den Gegenstand der Erfindung betrifft, sind in der Zeichnung dargestellt.

In dieser zeigen
als Hintergrunderläuterung für das Verständnis der Erfindung
- Fig. 1a: eine Ansicht einer auf einer Welle axial gesicherten Tellerfeder in Wellenachsrichtung,
- Fig. 1b: die Tellerfeder nach Fig. 1a vor dem Aufschieben auf die Welle,
und zur Darstellung des tatsächlichen Gegenstandes der Erfindung
- Fig. 2: einen Längsschnitt durch eine Welle mit einer gegen einen Anschlag zu sichernden Tellerfeder.

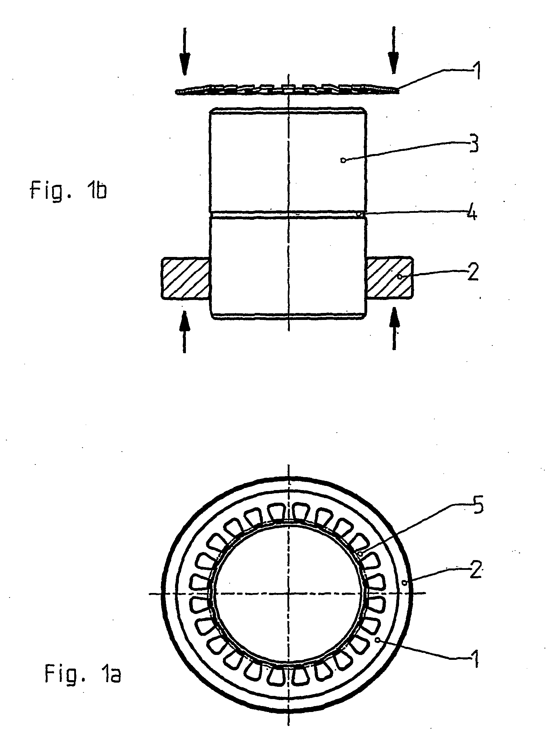

Bei der Ausführung nach den Figuren 1a, b kann die Tellerfeder 1 gegen einen Gegenkörper 2 zur Anlage kommen, der axial frei beweglich bleibt oder einen solchen Gegenkörper 2 der unter von der Tellerfeder 1 ausgehender Federkraft beständig an dieser anliegen soll. Diese beiden Anwendungsfälle stellen mit Bezug auf die Montage der Tellerfeder 1, das heißt dem Aufschieben dieser Tellerfeder 1 auf eine Welle 3 keinen grundsätzlichen Unterschied dar, wenn die Tellerfeder 1 jeweils in ungespanntem Zustand in die Position der Verschiebesicherung geschoben werden kann. Bei beständiger Anlage des Gegenkörpers 2 bedeutet dies, dass zunächst die Tellerfeder 1 verschiebegesichert montiert ist, bevor der Gegenkörper 2 die Tellerfeder 1 spannt.

In der Welle 3 ist in dem Bereich, in dem die Tellerfeder 1 axial lagegesichert sein soll, eine Umfangsnut 4 vorgesehen. Die Tellerfeder 1 besitzt im Bereich ihres Innenumfanges umfangsmäßig gleichmäßig verteilt eine Vielzahl radial frei abstehender, gegeneinander beabstandeter Federstege 5. Eine Tellerfeder 1 mit einem derart gestalteten Innenumfang kann auch als innengeschlitzte Tellerfeder 1 bezeichnet werden.

Eine für einen der beiden Anwendungsfälle nach Fig. 1 montierte Tellerfeder 1 dient in dem einen Fall dazu, einen frei beweglichen Gegenkörper 2 federnd abfangen zu können, wenn er auf die Tellerfeder 1 auftrifft. In dem anderen Fall liegt der Gegenkörper 2 federspannend an der Tellerfeder 1 an, wobei allerdings zunächst eine anlagenfreie Montage der Tellerfeder 1 möglich ist.

Bei der Ausführung nach Fig. 2 ist der Gegenkörper 6 bereits vor der Montage der Tellerfeder 1 axial fest mit der Welle 3 verbunden und die Tellerfeder 1 soll nach ihrer Montage an diesem Gegenkörper 6 gespannt anliegen. Die Tellerfeder 1 muss in diesem Fall unter Aufbau der Federspannung an den axial bereits arretierten Gegenkörper 6 montiert, das heißt in die Umfangsnut 4 eingeschnappt werden. Da sich in einem solchen Fall beim Spannen der Tellerfeder 1 deren Innenumfang verkleinert; muss sich entweder die Tellerfeder 1 insgesamt radial dehnen können oder der Innenumfangsbereich der Tellerfeder 1 muss beispielsweise in der Form elastischer Federstege 5 ausgeführt sein, die sich in axialer Richtung vor dem Einschnappen in die Umfangsnut 4 elastisch verformen können müssen oder die Tellerfeder muss so weit elastisch umstülpbar sein, dass ihr Innendurchmesser wieder zunimmt und sie auf der Welle mit dem Innendurchmesser voran bis in die Nut geschoben wird, um dort unter Verminderung des Innendurchmessers einzurasten.

## Patentansprüche

1. Zwei in einer Richtung unter der Kraft einer axial verschiebegesichert gelagerten Tellerfeder (1) gegeneinander verspannte Bauteile (3, 6), von denen ein erstes (3) dieser Bauteile das zweite (6) in dieser Richtung als Aufnahmekörper für die Tellerfeder (1) mit einer zumindest abschnittsweise zylindrischen Oberfläche durchgreift, wobei
- die Tellerfeder (1) radial außen als ein in Umfangsrichtung geschlossener Kreisringabschnitt ausgebildet ist,
- in dem kreiszylindrischen Oberflächenbereich des von dem ersten Bauteil (3) gebildeten Aufnahmekörpers eine Umfangsnut (4) zur Aufnahme und axialen Fixierung des radialen Innenbereiches der Tellerfeder (1) vorgesehen ist, wobei dieser Innenbereich der Tellerfeder (1) als deren Fixierbereich dient,
- die die Tellerfeder (1) abstützende Ringflanke der Umfangsnut (4) innerhalb des als Aufnahmekörper dienenden ersten Bauteiles (3) in einem Abstand von der Anlagefläche der Tellerfeder (1) an dem zweitem Bauteil (6) angeordnet ist, der der Höhe der Tellerfeder in einem bei der Montage gespannten Zustand entspricht,
- die Tellerfeder (1) in ihrem Fixierbereich aufgelöst ist in eine Vielzahl radial jeweils frei abstehender, voneinander beabstandeter Federstege (5),
**dadurch gekennzeichnet,**
**dass** die Übergangsbereiche der Federstege (5) zur geschlossenen, äußeren Mantelfläche der Tellerfeder (1) gemeinsam einen Anteil von nicht größer als 15% des Innenumfangs der geschlossenen, äußeren Mantelfläche der Tellerfeder einnehmen.

2. Zwei gegeneinander verspannte Bauteile nach Anspruch 1,
**dadurch gekennzeichnet,**
**dass** die Übergangsbereiche der Federstege (5) an der Innenumfangsfläche der geschlossenen, äußeren Mantelfläche gemeinsam keinen größeren Anteil als 12% einnehmen.

3. Zwei gegeneinander verspannte Bauteile nach Anspruch 2,
**dadurch gekennzeichnet,**
**dass** die Übergangsbereiche der Federstege (5) an der Innenumfangsfläche der geschlossenen, äußeren Mantelfläche gemeinsam keinen größeren Anteil als 10% einnehmen.

4. Zwei gegeneinander verspannte Bauteile nach einem der vorhergehenden Ansprüche,
**dadurch gekennzeichnet,**
**dass** bis zu einer vorgebbaren, auf die Tellerfeder (1) einwirkenden axialen Spannkraft zwischen dem Grund der Umfangsnut (4) und dem zugewandten Rand der Tellerfeder ein Spiel besteht.

5. Zwei gegeneinander verspannte Bauteile nach Anspruch 4,
**dadurch gekennzeichnet,**
**dass** bei Überschreiten eines vorgegebenen Axialkraftgrenzwertes einer auf die Tellerfeder (1) einwirkenden Spannkraft der Grund der Umfangsnut (4) den zugewandten Rand der Tellerfeder (1) kontaktiert.

## Claims

1. Two components (3, 6) braced against each other in one direction, under the force of a plate spring (1) mounted to be secured against axial displacement, of which a first component (3) of these components passes through the second (6) in this direction, as an accommodation body for the plate spring (1), with a surface that is cylindrical, at least in parts, wherein
- the plate spring (1) is configured radially on the outside as a circular ring segment that is closed in the circumferential direction,
- a circumferential groove (4) for accommodation and axial fixation of the radial inner region of the plate spring (1) is provided in the circular-cylindrical surface region of the accommodation body formed by the first component (3), whereby this inner region of the plate spring (1) serves as its fixation region,
- the ring flank of the circumferential groove (4) that supports the plate spring (1) is disposed within the first component (3) that serves as an accommodation body, at a distance from the contact surface of the plate spring (1) on the second component (6), which corresponds to the height of the plate spring in a tensioned state during assembly,
- the plate spring (1) is broken up, in its fixation region, into a plurality of spring webs (5) that stand freely away radially, in each instance, and are spaced apart from each other,
**characterized in that**
the transition regions of the spring webs (5) to the closed, outer surface of the plate spring (1) jointly take up a proportion of not more than 15% of the inside circumference of the closed, outer surface of the plate spring.

2. Two components braced relative to each other according to Claim 1,
**characterized in that**
the transition regions of the spring webs (5) on the inside circumference surface of the closed, outer surface jointly take up a proportion that is not greater than 12%.

3. Two components braced relative to each other according to Claim 2,
**characterized in that**
the transition regions of the spring webs (5) on the inside circumference surface of the closed, outer surface jointly take up a proportion that is not greater than 10%.

4. Two components braced relative to each other according to any of the preceding claims,
**characterized in that**
a play exists up to a predeterminable axial tensile force that acts on the plate spring (1) between the base of the circumferential groove (4) and the facing edge of the plate spring.

5. Two components braced relative to each other according to Claim 4,
**characterized in that**
on exceeding of a predetermined axial force limit value of a tensile force acting on the plate spring (1), the base of the circumferential groove (4) makes contact with the facing edge of the plate spring (1).

## Revendications

1. Deux éléments constitutifs (3, 6) contraints l'un contre l'autre sous la force d'un ressort à disques (1) logé en étant bloqué contre le déplacement en direction axiale, dont un premier (3) desdits éléments constitutifs traverse le deuxième (6) dans cette direction en tant qu'organe de logement pour le ressort à disques (1), avec une surface au moins cylindrique par sections,
- le ressort à disque (1) étant conçu en direction périphérique vers l'extérieur comme un segment d'anneau de cercle,
- dans la zone superficielle cylindrique circulaire de l'organe de réception formé par le premier élément constitutif (3), une rainure périphérique (4) étant prévue pour le logement et la fixation axiale de la zone intérieure radiale du ressort, ladite zone intérieure du ressort à disques (1) servant de zone de fixation de ce dernier
- le flanc annulaire de la rainure périphérique (4) soutenant le ressort (1) étant disposé à l'intérieur du premier élement constitutif (3) servant d'organe de logement, avec un écart par rapport à la surface d'appui du ressort à disques (1) sur le deuxième élément constitutif (6) qui correspond à la hauteur du ressort à disques dans une position tendue lors du montage,
- le ressort à disques (1) étant décomposé dans sa zone de fixation en une pluralité de barrettes à ressort (5) écartées entre elles, s'éloignant chacune librement en direction radiale
**caractérisés en ce que**
les zones de passage des barrettes à ressort (5) vers la surface d'enveloppe extérieure fermée du ressort à disques (1) occupent en commun une part qui n'est pas supérieure à 15 % de la périphérie intérieure de la surface d'enveloppe extérieure fermée du ressort à disques.

2. Deux éléments constitutifs contraints l'un contre l'autre selon la revendication 1, **caractérisés en ce que**
les zones de passage des barrettes à ressort (5) n'occupent en commun pas une part supérieure à 12 % de la surface de périphérie intérieure de la surface d'enveloppe extérieure fermée.

3. Deux éléments constitutifs contraints l'un contre l'autre selon la revendication 1, **caractérisés en ce que**
les zones de passage des barrettes à ressort (5) n'occupent en commun pas une part supérieure à 10 % de la surface de périphérie intérieure de la surface d'enveloppe extérieure fermée.

4. Deux éléments constitutifs contraints l'un contre l'autre selon la revendication 2, **caractérisés en ce qu'**il existe un jeu jusqu'à une force élastique axiale prédéfinissable, agissant sur le ressort à disques (1) entre le fond de la rainure périphérique (4) et le bord faisant face du ressort à disques.

5. Deux éléments constitutifs contraints l'un contre l'autre selon la revendication 4, **caractérisés en ce que,** en cas de dépassement d'une valeur de force élastique axiale d'une force élastique agissant sur le ressort à disques (1), le fond de la rainure périphérique (4) contacte le bord faisant face du ressort à disques (1).
